# EUROPEAN PATENT APPLICATION

(11) **EP 1 109 365 A1**
(43) Date of publication of application: **20.06.2001**
(21) Application number: 00937231.9
(22) Date of filing: 15.06.2000
(51) Int. Cl.: H04L 12/56, H04L 12/28, H04J 3/00

(54) **RADIO COMMUNICATION DEVICE AND RADIO COMMUNICATION METHOD**

(30) Priority: 24.06.1999 JP 17873799
(71) Applicant: MATSUSHITA ELECTRIC INDUSTRIAL CO., LTD., Kadoma-shi, Osaka 571-8501 (JP)
(72) Inventor: SHI, Guizeng, Akishima-shi, Tokyo 196-0004 (JP); KATO, Osamu, Yokosuka-shi, Kanagawa 237-0066 (JP); UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP0003874
(87) International publication number: WO0101642

(57) **Abstract**

Downlink transmission situation buffer 601 stores information on downlink transmission queuing cell for each communication terminal. Uplink transmission situation buffer 603 stores information on uplink transmission queuing cell for each communication terminal. Based on the information stored in uplink transmission situation buffer 603 and the information stored in downlink transmission situation buffer 601, channel allocating section 602 allocates a unit sub-slot fairly to each transmission queuing cell.

## Description

### Technical Field

The present invention relates to a wireless communication apparatus using ATM (Asynchronous Transfer Mode).

### Background Art

As conventional wireless communication systems using ATM, there are major two samples as described below.

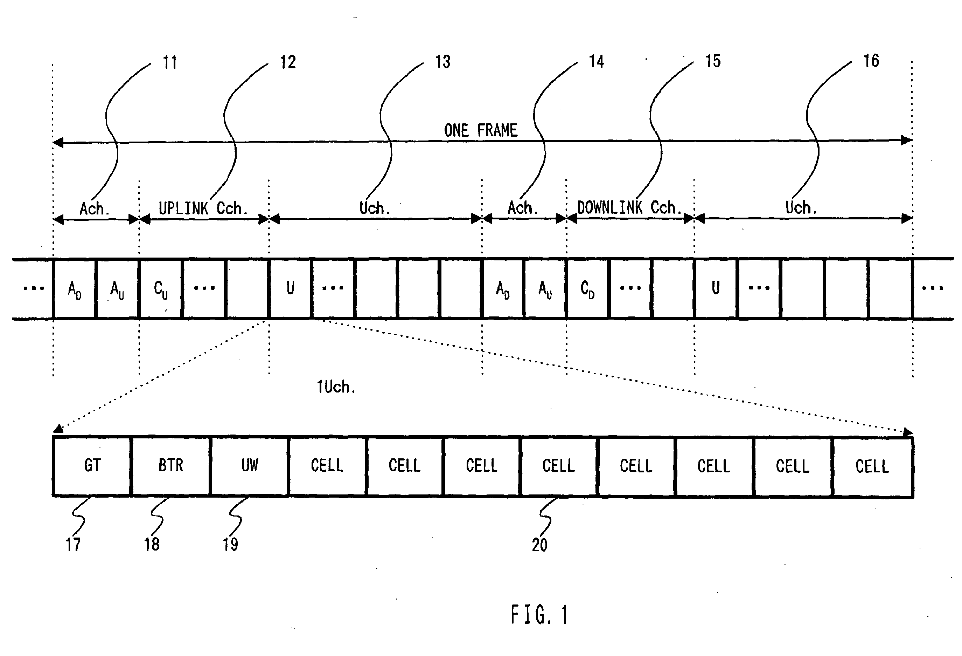

A first conventional system is an AWA (ATM Wireless Access) system with a purpose of providing multimedia services to mobile users. FIG.1 is a schematic diagram illustrating a structure of a frame for use in a conventional wireless communication system.

As illustrated in FIG.1, the structure of one frame has a first part in which access channel (Ach) 11 is followed by control channel (Cch) 12 and then user channel (Uch) 13, and a latter part in which access channel (Ach) 14 is followed by control channel (Cch) 15 and then user channel (Uch) 16.

Each of access channels 11 and 14 contains two time slots, namely, a downlink time slot (A_{D}) and an uplink time slot (A_{U}). Downlink Ach is a channel used in instructing a mobile station on Cch allocation as well as a broadcast channel for various control information. Uplink Ach is a random access channel to acquire Cch.

Control channel (Cch) 12 is an uplink control channel and control channel (Cch) 15 is a downlink control channel. Cch is used in transmitting and receiving Uch control information such as establishment, disconnection and switching of Uch and messages concerning Cch switching control.

User channels (Uch) 13 and 16 contain downlink time slots for a base station to transmit for example ATM cells to a mobile station, and uplink time slots for the mobile station to transmit for example ATM cells to the base station.

In the conventional communication system using the aforementioned frame, a base station controls all the time slots of the control channels (Cch) and user channels (Uch). As a method for setting a communication band for a user request, the base station allots time slots for use by each mobile station from among time slots of user channels (Uch) 13 and 16 corresponding to the user request.

Further in an asymmetric traffic on up-and downlink channel, a base station designates the number of Uch time slots for the uplink and that for the downlink corresponding to a user information transmission rate independently using a wireless channel control section at the time of channel allocation, instead of designating the same number of Uch time slots for the uplink and downlink, and thereby performs setting of communication band for user request.

A mobile station establishes synchronization of Ach with a base station providing a highest received level immediately after being turned on, and then transmits a message for requesting Cch establishment using uplink Ach by random access. The base station that receives the request searches unused Cch, transmits a Cch allocation message, and thereby notifies the mobile station of a Cch time slot number to use. Each base station is allocated one uplink Cch and one downlink Cch. Using these Cchs, each base station always transmits control information. Based on call control information, the base station notifies the mobile station of Uch time slots corresponding to a communication rate requested by a user using a Uch allocation instructing message. The base station manages a relationship between a Uch time slot number and Cch or mobile station number, and further manages used channels on Cch and Uch for each mobile station.

A second example of the conventional systems is an ATM-LAN system using radio signals with a wavelength of the order of millimeters. This system uses an uplink channel based on a random access scheme at a reservation stage and on a polling scheme at an information transmission stage succeeding the reservation stage.

The polling in the above system includes periodical polling (such polling that periodically transmits a polling signal to each user) and non-periodical polling (such polling that irregularly transmits a polling signal to each user). These kinds of polling are used corresponding to QoS (Quality of Service) of user information.

A base station sets information such as a polling period, priority and polling time in a polling scheduler. Further based on the periodical polling, the base station calculates the polling time of each user to update the contents of the polling scheduler. After that, based on the updated polling scheduler, the base station transmits the polling signal to each user. According to the polling signal transmitted from the base station as descried above, each user transmits a transmission queuing data frame.

In addition, the base station performs the non-periodical polling between the periodical polling.

However, there are following problems in the convention systems.

The first system has a frame structure disorderly containing an uplink time slot and downlink time slot on Uch, although a guard time with a long time interval is needed between the uplink time slot and downlink time slot for immunity to interference. Accordingly in the first conventional system, it is necessary to provide a large number of guard time intervals as a whole, and therefore there are problems that the frame utilization rate deteriorates and that the system capacity decreases.

Further in the first conventional system, the channel allocation is not performed based on traffic amounts of the uplink and downlink. Therefore, in an asymmetric traffic on which traffic amounts (transmission rates) are different between the uplink and downlink channels, the frame utilization rate is low on a channel with a low transmission rate as compared to the other channel with a high transmission rate. Accordingly, there is another problem that the first conventional system is not capable of improving the system capacity.

Furthermore in the first conventional system, packets do not collide with each other, however, Uch is occupied for each connection. Therefore the efficiency based on the packet exchange deteriorates and comes close to that based on channel exchange. In currently used packet access control schemes (such as random access scheme and reservation scheme), the efficiency is improved to some extent, however, the problem on the collision is not improved, therefore the throughput deteriorates, and delay and delay variation are increased.

In the second conventional system, communications corresponding to QoS of user are achieved, however, an asymmetric traffic is not considered, and therefore there are problems that the frame utilization rate and system capacity cannot be improved.

### Disclosure of Invention

It is an object of the present invention to provide a wireless communication apparatus that faithfully responds to an asymmetric traffic and QoS of user and enables improved frame utilization rate and improved system capacity. This object is achieved by allocating time slots for use by each communication user based on respective situations of transmission queuing cell on uplink channel and downlink channel of the communication user.

### Brief Description of Drawings

FIG.1 is a schematic diagram illustrating a structure of a frame used in a conventional wireless communication system;
FIG.2 is a schematic diagram illustrating a structure of a communication system using a wireless communication apparatus according to a first embodiment of the present invention;
FIG.3 is a schematic diagram illustrating a frame format used in the wireless communication apparatus according to the first embodiment;
FIG.4 is a schematic diagram illustrating a structure of a time slot on a user channel of the frame format used in the wireless communication apparatus according to the first embodiment;
FIG.5 is a block diagram illustrating a configuration of a base station provided with the wireless communication apparatus according to the first embodiment;
FIG.6 is a block diagram illustrating a configuration of a wireless channel control section in the wireless communication apparatus according to the first embodiment;
FIG.7 is a block diagram illustrating a configuration of a user channel managing section in the wireless communication apparatus according to the first embodiment;
FIG.8A is a schematic diagram illustrating a channel allocation method for use by a channel allocating section in the wireless communication apparatus according to the first embodiment;
FIG.8B is a schematic diagram illustrating a channel allocation result by the channel allocating section in the wireless communication apparatus according to the first embodiment;
FIG.9A is a schematic diagram illustrating a channel allocation method for use by a channel allocating section in the wireless communication apparatus according to a second embodiment of the present invention;
FIG.9B is a schematic diagram illustrating a channel allocation result by the channel allocating section in the wireless communication apparatus according to the second embodiment;
FIG.10A is a schematic diagram illustrating a channel allocation method for use by a channel allocating section in the wireless communication apparatus according to a third embodiment of the present invention;
FIG.10B is a schematic diagram illustrating a channel allocation result by the channel allocating section in the wireless communication apparatus according to the third embodiment;
FIG.11 is a schematic diagram illustrating an example of a frame structure according to a fourth embodiment of the present invention; and
FIG.12 is a schematic diagram illustrating an example of a frame structure according to a fifth embodiment of the present invention.

### Best Mode for Carrying Out the Invention

Preferred embodiments for carrying out the present invention are explained specifically below with reference to accompanying drawings. In addition, a wireless communication apparatus according to the present invention performs communications using ATM.

### (First embodiment)

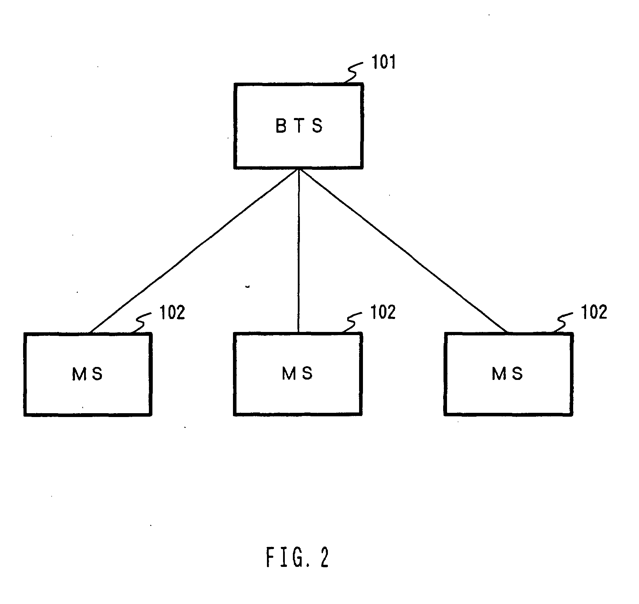

FIG.2 is a schematic diagram illustrating a structure of a communication system using the wireless communication apparatus according to the first embodiment of the present invention. Base station (BTS) 101 communicates with mobile station (MS) 102, for example, using a TDMA (Time Division Multiple Access)/TDD (Time Division Duplex) system.

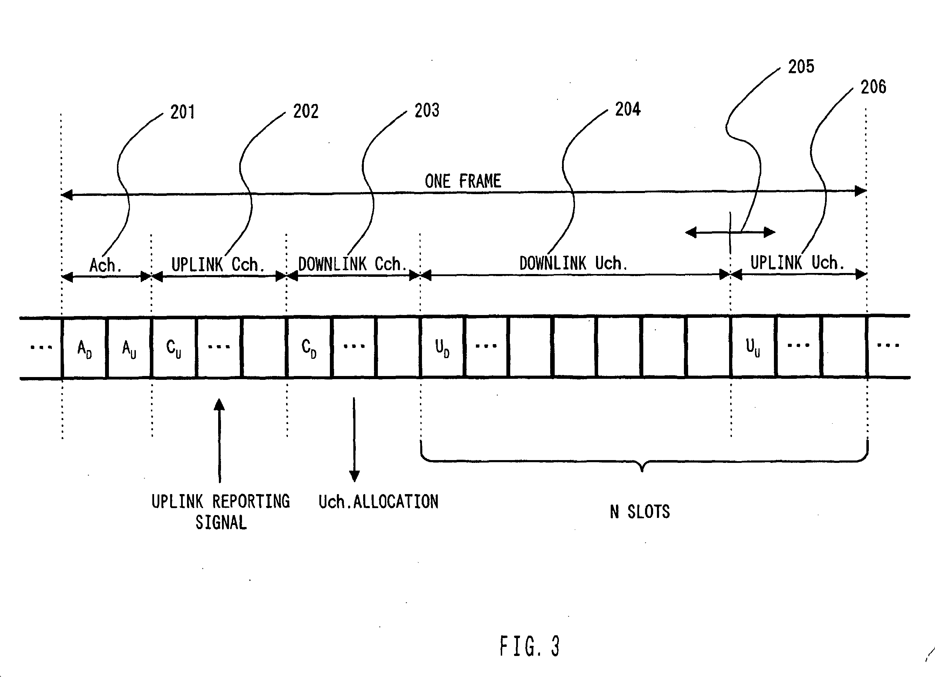

FIG.3 is a schematic diagram illustrating a frame format used in the wireless communication apparatus according to the first embodiment. As illustrated in FIG.3, a unit frame (1 frame) is comprised of access channel (Ach) 201, uplink control channel (Cch) 202, downlink control channel (Cch) 203, downlink user channel (Uch) 204, and uplink user channel (Uch) 206.

Access channel 201 is comprised of downlink time slot (A_{D}) and uplink time slot (A_{U}). The downlink time slot is used for base station 101 to broadcast various control information to each mobile station 102 as well as instructing a control channel allocated to each mobile station 102. Meanwhile, the uplink time slot is used for each mobile station 102 to acquire the control channel.

Uplink control channel 202 and downlink control channel 203 are used for base station 101 and each mobile station 102 to communicate control information on establishment, disconnection and switching of each user channel and information on switching control of each control channel.

In particular, uplink control channel 202 is a channel used for each mobile station 102 to transmit to base station 101 a reporting signal for reporting contents of a transmission buffer of each mobile station 102 for each frame. The reporting signal is indicative of presence or absence of transmission data (such as an ATM cell) in the transmission buffer of each mobile station 102, queuing situation of cells to be transmitted (the number of queuing cells or level representative of the number of queuing cells), and particular QoS requirement. Base station 101 thereby recognizes a situation on transmission of each mobile station 102.

Meanwhile, downlink control channel 203 is a channel used for base station 101 to notify a position of a user channel allocated to each mobile station 102 according to a user channel allocation result described later.

Downlink user channel 204 is a channel used for base station 101 to transmit, for example, ATM cells to each mobile station 102 . Uplink user channel 206 is a channel for each mobile station 102 to transmit, for example, the ATM cells to base station 101. The respective numbers of time slots contained on downlink user channel 204 and on uplink user channel 206 are not fixed, and boundary position 205 between the channels is determined based on the user channel allocation result described later.

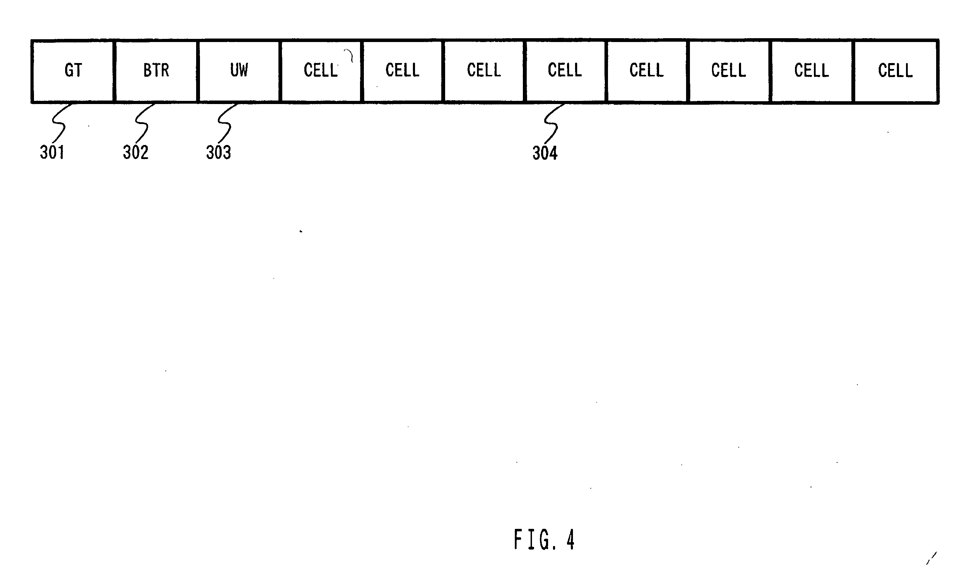

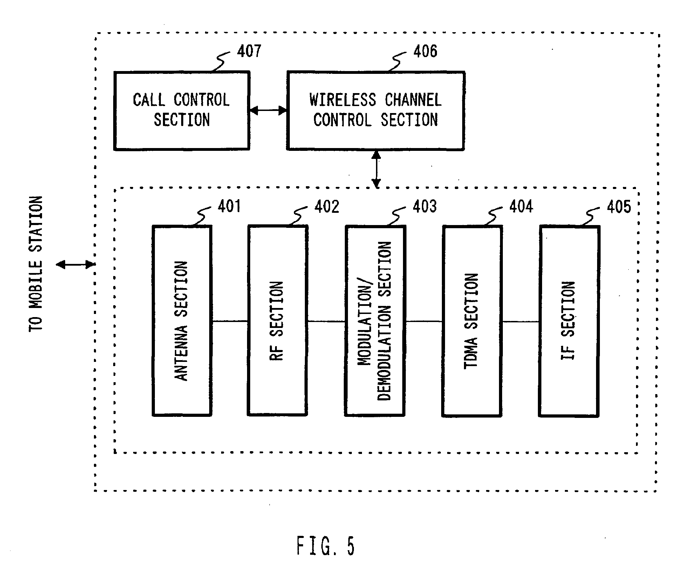

FIG.4 illustrates an example of a structure of each time slot on the aforementioned user channel. FIG.4 is a schematic diagram illustrating the structure of the time slot on the user channel with the frame format used in the wireless communication apparatus according to this embodiment. Each time slot is comprised of protection guard time (GT) 301, bit timing recovery code (BTR) 302, unique word (UW) 303, and eight cells 304. In addition, the aforementioned structure of the time slot on the user channel is one of examples and is capable of being modified as appropriate corresponding to, for example, a communication situation and use.

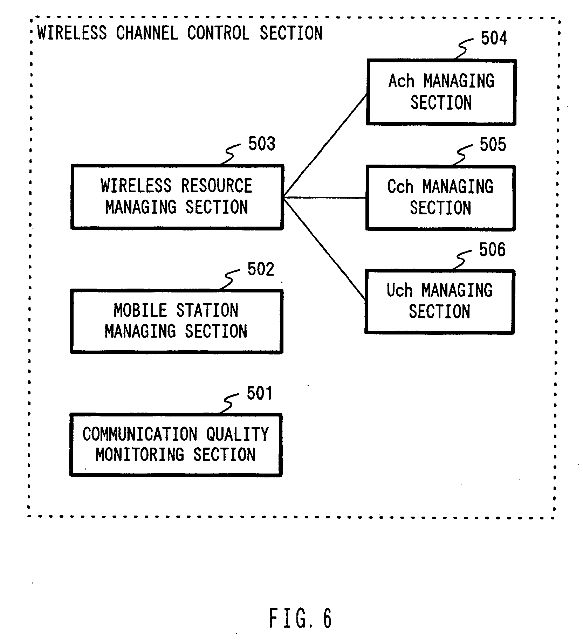

An internal configuration of base station 101 illustrated in FIG.2 is next explained using FIG.5. FIG.5 is a block diagram illustrating a configuration of a base station provided with the wireless communication apparatus according to this embodiment.

First, at the time of reception, antenna section 401 receives a signal transmitted from each mobile station 102 to output to RF section 402. RF section 402 performs frequency conversion on the signal transmitted from antenna section 401, and outputs the signal with the converted frequency to modulation/demodulation section 403. Modulation/demodulation section 403 performs demodulation such as π/4QPSK scheme on the signal output from RF section 402, and outputs the demodulated signal to TDMA section 404.

TDMA section 404 performs general TDMA processing on the signal output from modulation/demodulation section 403. That is, TDMA section 404 first fetches data corresponding to a time slot at a predetermined timing from the signal output from modulation/demodulation section 403, and extracts a unique word from the fetched data to establish synchronization.

After establishing the synchronization, TDMA section 404 fetches various information from the data corresponding to a time slot, and corresponding to the contents of the fetched information, outputs the information to IF section 405 or wireless channel control section 406. Specifically, when the thus fetched information is various control information described previously transmitted on access channel 201 and control channel 202, TDMA section 404 outputs the fetched information to wireless channel control section 406. Meanwhile, when the thus fetched information is, for example, speech information transmitted on user channel 206, TDMA section 404 outputs the fetched information to IF section 405.

IF section 405 outputs the information output from TDMA section 404 to PSTN (Public Switched Telephone Network) and ISDN (Integrated Services Digital Network).

Next, at the time of transmission, IF section 405 outputs a signal transmitted from PSTN and ISDN to TDMA section 404.

According to the frame format contents (FIG.3) described previously, TDMA section 404 performs general TDMA processing on the signal containing various control information output from wireless channel control section 406 or the signal output from IF section 405. That is, according to the frame format contents, TDMA section 404 adds a control signal such as a unique word to the signal containing various control information output from wireless channel control section 406 or the signal output from IF section 405 to generate data corresponding to a time slot, and inserts the generated data corresponding to a time slot into a predetermined slot at a predetermined timing to output to modulation/demodulation section 403.

Modulation/demodulation section 403 performs modulation such as π/4QPSK scheme on the signal output from TDMA section 404, and outputs the modulated signal to RF section 402. RF section 402 performs frequency conversion on the signal output from modulation/demodulation section 403, and transmits the signal with the converted frequency to each mobile station 102 through antenna section 401.

Call control section 407 performs user management such as call connection control and authentication of a user (mobile station).

Wireless channel control section 406 controls above-mentioned antenna section 401, RF section 402, modulation/demodulation section 403, TDMA section 404, IF section 405, and call control section 407. An internal configuration of wireless channel control section 406 is explained using FIG.6.

FIG.6 is a block diagram illustrating the internal configuration of wireless channel control section 406 provided in base station 101 equipped with the wireless communication apparatus according to this embodiment. Wireless channel control section 406 is mainly provided with communication quality monitoring section 501, mobile station managing section 502, and wireless resource managing section 503.

Communication quality monitoring section 501 always monitors a communication quality of each channel, and performs processing such as switching or disconnection of a channel on which the communication quality deteriorates. Mobile station managing section 502 manages a telephone number of each mobile station 102, while managing a channel for use by mobile station.

Wireless resource managing section 503 manages, for example, allocation of wireless resource. That is, wireless resource managing section 503 performs channel allocation to each mobile station 102 using various control information output from TDMA section 404, while outputting a channel allocation result to TDMA section 404. More specifically, wireless resource managing section 503 is comprised of access channel (Ach) managing section 504, control channel (Cch) managing section 505, and user channel (Uch) managing section 506.

Access channel managing section 504 manages access channel 201. In particular, when access channel managing section 504 receives through TDMA section 404 a signal for requesting acquisition of a control channel transmitted from each mobile station 102, the section 504 requests control channel managing section 505 to allocate a control channel to each mobile station 102. Then, access channel managing section 504 receives the control channel allocation result for each mobile station 102 from control channel managing section 505, and transmits the result to each mobile station 102 through TDMA section 404.

Control channel managing section 505 manages uplink control channel 202 and downlink control channel 203. That is, when control channel managing section 505 receives a request for allocating a control channel to each mobile station 102 from access channel managing section 504, the section 503 determines a time slot to allocate to each mobile station 102 from among time slots on each control channel. After that, control channel managing section 505 outputs the allocation result described above to access channel managing section 504.

Further when control channel managing section 505 receives the reporting signal for reporting the contents of the transmission buffer transmitted for each frame from each mobile station 102 through TDMA section 404, the section 505 outputs a signal for requesting time slot allocation on each user channel to user channel managing section 506 along with the reporting signal. Then, when control channel managing section 505 receives the allocation result from user channel managing section 506, the section 505 transmits the allocation result to each mobile station 102 through TDMA section 404.

User channel managing section 506 manages uplink user channel 206 and downlink user channel 204. Specifically, user channel managing section 506 allocates time slots for use by each mobile station 102 on uplink user channel 206 and on downlink user channel 204. More specifically, user channel managing section 506 allocates time slots for use by each mobile station 102 based on a situation (hereinafter referred to as uplink transmission situation) of the number of transmission queuing cells that each mobile station 102 has, another situation (hereinafter referred to as downlink transmission situation) of the number of transmission queuing cells that base station 101 has, and the other situation indicating how many transmission queuing cells that require particular QoS are contained in respective transmission queuing cells that each mobile station 102 and base station 101 have.

Among those situations, since user channel' managing section 506 manages each user channel, the section 506 can always recognize the downlink transmission situation and the situation (hereinafter referred to as QoS requirement situation of the base station) of the transmission queuing cells that require the particular QoS contained in the transmission queuing cells that base station 101 has.

Meanwhile, since using the reporting signal described previously on uplink control channel 202, each mobile station transmits to base station 101 the uplink transmission situation and the situation (hereinafter referred to as QoS requirement situation of the mobile station) of the transmission queuing cells that require the particular QoS contained in the transmission queuing cells that mobile station 102 has, user channel managing section 506 can recognize the above situations.

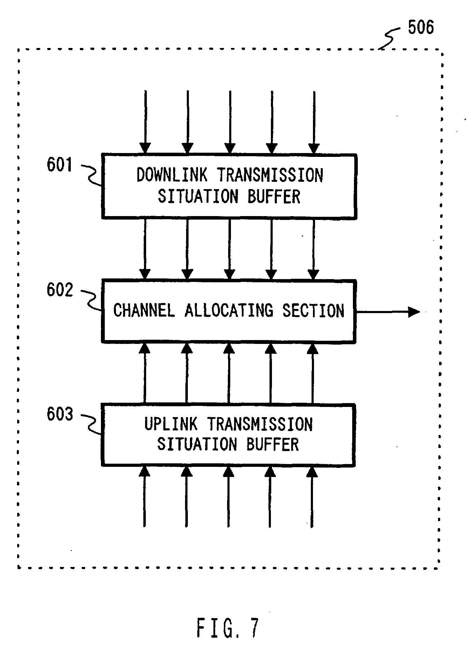

A specific configuration of user channel managing section 506 is explained below using FIG.7. FIG.7 is a block diagram illustrating a configuration of user channel managing section 506 provided inside base station 101 equipped with the wireless communication apparatus according to this embodiment.

User channel managing section 506 is mainly comprised of downlink transmission situation buffer 601, channel allocating section 602 and downlink transmission situation buffer 603.

Downlink transmission situation buffer 601 stores information on the downlink transmission situation and on the QoS requirement situation of the base station, while outputting the aforementioned information to channel allocating section 602.

Uplink transmission situation buffer 603 stores information on the uplink transmission situation and on the QoS requirement situation of the mobile station, while outputting the aforementioned information to channel allocating section 602. The uplink transmission situation and the QoS requirement situation of the mobile station are of information transmitted from each mobile station 102 to base station 101 using uplink control channel 202 as described above, and output to uplink transmission buffer 603 through control channel managing section 505.

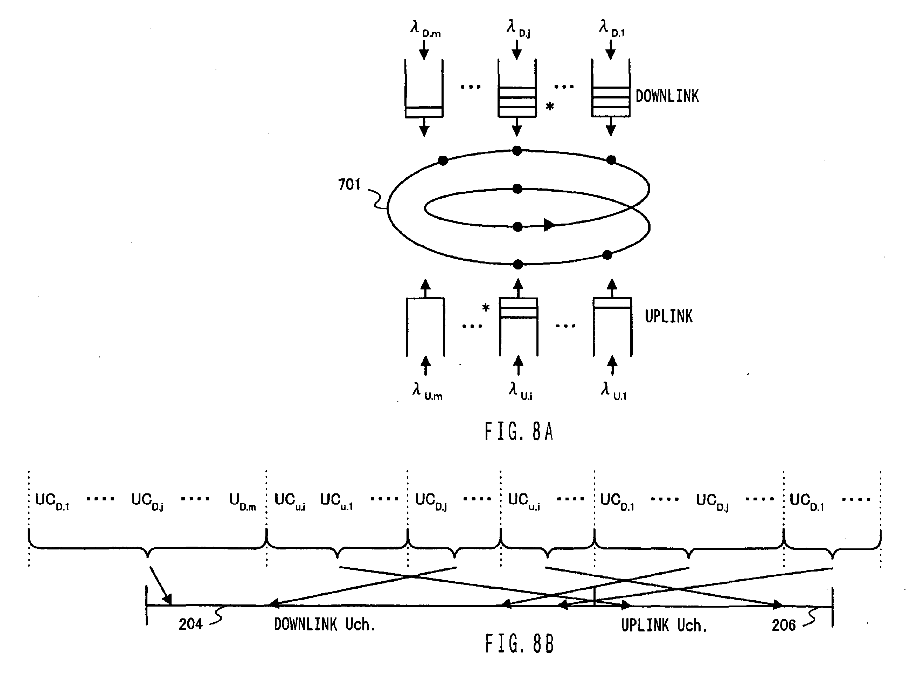

Channel allocating section 602 receives the information on the downlink transmission situation and on the QoS requirement situation of the base station from downlink transmission situation buffer 601 and further receives the information on the uplink transmission situation and on the QoS requirement situation of the mobile station from uplink transmission situation buffer 603. Based on the received information, channel allocating section 602 performs channel allocation on downlink user channel 204 and uplink user channel 206. A specific channel allocation method for use by channel allocating section 602 is explained below using FIG.8A.

FIG.8A is a schematic diagram illustrating a channel allocation method for use by channel allocating section 602 provided in base station 101 equipped with the wireless communication apparatus according to this embodiment.

As a channel allocation method, channel allocating section 602 adopts a scheme for achieving that channels are allocated fairly corresponding to both transmission situations, namely, the uplink transmission situation and downlink transmission situation without distinguishing between the uplink and downlink and that channels are allocated in consideration of the QoS requirements of the mobile station and of the base station. The scheme is explained using FIG.8A.

In FIG.8A, an upper portion indicates the downlink transmission situation and the QoS requirement situation of the mobile station stored in downlink transmission situation buffer 601, and a lower portion indicates the uplink transmission situation and the QoS requirement situation of the base station stored in uplink transmission situation buffer 603. That is, the upper potion indicates the buffer contents indicative of situations of transmission queuing cells to transmit to users (mobile stations) 1 to m that base station 101 has, respectively using λ _{D,1} to λ _{D,m}. The lower portion indicates the buffer contents indicative of situations of transmission queuing cells to transmit to base station 101 that users 1 to m have, respectively using λ_{U,1} to λ_{U,m}. For example, it is indicated that buffer λ_{D,1} contains three transmission queuing cells to transmit to user 1 from base station 101 and that buffer λ_{U,m} contains no transmission queuing cell to transmit to base station 101 from user m.

Further, a middle portion indicates dual shift ring 701 that conceptually indicates the channel allocation method. Dual shift ring 701 is mainly comprised of a ring (hereinafter referred to as normal ring) for fairly allocating channels to each user and another ring (hereinafter referred to as high-rate ring) for preferentially allocating channels to a particular user requiring a real-time and high-rate communication such as an image communication. The two rings are alternatively circulated. In addition, in FIG.8A, the normal ring is a ring lying on an outer side, and the high-rate ring is a ring lying on an inner side from the normal ring.

Channel allocating section 602 performs channel allocation according to a certain rule as described below. Channel allocating section 602 first determines (loop check) whether or not each user is a user for the allocation in the order along dual shift ring 701. The user for the allocation at the time of the normal ring is every user having a transmission queuing cell, and such a user at the time of the high-rate ring is only a particular user having a transmission queuing cell.

Further, channel allocating section 602 allocates a unit sub-slot, i.e., a single sub-slot (corresponding to a cell) to a user for the allocation, and decreases the number of transmission queuing cells in the buffer for this user by 1. Thereafter, channel allocating section 602 allocates a sub-slot to each user up to the maximum number of accommodated channels, i.e., the maximum number of sub-slots that a frame is capable of accommodating, while checking along dual shift ring 701.

The aforementioned channel allocation is performed for each frame. In each frame, the loop check is initiated starting from a position where the check of a last frame is finished in dual shift ring 701. In addition, when transmission queuing cells are consumed, the allocation in the frame is finished.

Finally channel allocating section 602 divides all sub-slots allocated to respective users into two groups, namely, an uplink sub-slot group and a downlink subslot group. Then channel allocating section 602 gathers the sub-slots allocated to each user into one as a unit time slot, i.e., a single time slot (variable length slot) for each user.

In addition, a service priority of a particular user is changed by changing an alternate frequency between the normal ring and high-rate ring.

A specific example of the channel allocation method described above is next explained further using FIG.8B. FIG.8B is a schematic diagram illustrating a channel allocation result by channel allocating section 602 provided in base station 101 equipped with the wireless communication apparatus according to this embodiment.

It is herein assumed that an iₜₕ user on uplink and a jₜₕ user on downlink are particular users, and that the loop check is initiated from a first user on downlink in normal ring circulation.

Channel allocating section 602 first determines whether or not a first user on downlink is a user for the allocation. The first user on downlink has transmission queuing cells, and therefore channel allocating section 602 determines the first user on downlink to be the user for the allocation. Accordingly channel allocating section 602 allocates a sub-slot (UC_{D,1}) to the first user on downlink, while decreasing the number of transmission queuing cells in the buffer for this user by 1.

Similarly, channel allocating section 602 allocates a sub-slot (UC_{D,j}) and sub-slot (UC_{D,m}) to the jₜₕ user on downlink and an m^{th} user on downlink, while decreasing the respective numbers of transmission queuing cells in the buffers for these users by 1, respectively.

Further, channel allocating section 602 checks along dual shift ring 701, and determines an m^{th} user on uplink. The m^{th} user on uplink does not have any transmission queuing cell, and therefore channel allocating section 602 does not adopt the m^{th} user for the allocation and determines a next user.

Then, channel allocating section 602 determines an iₜₕ user on uplink and a first user on uplink to be users for the allocation, and allocates a sub-slot (UC_{U,i}) and sub-slot (UC_{U,1}) to these users, while decreasing the respective numbers of transmission queuing cells in the buffers for these users by 1, respectively.

The loop check is next performed while circulating the high-rate ring (first circulation). That is, channel allocating section 602 determines only the jₜₕ user on downlink and iₜₕ user on uplink to be users for the allocation, and allocates a sub-slot (UC_{D,j}) and sub-slot (UC_{U,i}) to these users, while decreasing the respective numbers of transmission queuing cells in the buffers for these users by 1, respectively.

At this point, since the transmission queuing cells are still present, the loop check is performed along the normal ring (second circulation). Similarly, channel allocating section 602 allocates a sub-slot (UC_{D,1}) and sub-slot (UC_{D,J}) to the first user on downlink and jₜₕ user on downlink respectively. Then, since a user on uplink does not have any transmission queuing cell, the loop check is performed along the high-rate ring (second circulation).

At this point, since the particular users, i.e., the jₜₕ user on downlink and iₜₕ user on uplink do have any transmission queuing cells, the loop check is performed along the normal ring (third circulation).

In the normal ring (third circulation), channel allocating section 602 allocates a sub-slot (UC_{D,1}) to the first user on downlink.

At this point, since any transmission queuing cell is not present in the buffer for each user, channel allocating section 602 finishes the allocation in this frame. In addition, the allocation in this frame is finished at a point of the first user on downlink, and therefore an allocation in a next frame is initiated from this user.

As a result, in the order illustrated at the upper portion in FIG.8A, channel allocating section 602 allocates sub-slots. Finally, as illustrated at a lower portion in FIG.8B, channel allocating section 602 divides all the sub-slots allocated to respective users into the uplink sub-slot group and downlink sub-slot group, and in each sub-slot group, gathers the sub-slots allocated to each user into a time slot (variable length slot) for each user. Further, channel allocating section 602 inserts thus gathered downlink time slots and uplink time slots respectively into downlink user channel 204 and uplink user channel 206 illustrated in FIG.3. Thereby on the user channel, the uplink time slots and downlink time slots are divided with boundary 205 therebetween, and therefore a guard time to be needed is suppressed. As a result, the frame is effectively used.

As described above, channel allocating section 602 allocates the channel fairly without distinguishing between the uplink and downlink corresponding to respective transmission situations of uplink and of downlink. Further, channel allocating section 602 allocates the channel by considering respective QoS requirements of a mobile station and of a base station. The foregoing is the specific channel allocation method in channel allocating section 602.

The operation of base station 101 provided with the wireless communication apparatus with the above configuration is next explained using FIG.5.

First, at the time of reception, a signal transmitted from each mobile station 102 is received at antenna section 401 of base station 101 and is output to RF section 402. RF section 402 performs frequency conversion on the signal received at antenna section 401 to output to modulation/demodulation section 403. Modulation/demodulation section 403 performs demodulation such as *π* /4QPSK scheme on the signal subjected to the frequency conversion in RF section 402 to output to TDMA section 404.

TDMA section 404 fetches data from the signal demodulated in modulation/demodulation section 403 for each time slot at a predetermined timing, and extracts various information from the fetched data. The thus extracted information is output to either wireless channel control section 406 or IF section 405 corresponding to contents of the information. That is, the extracted information is output to IF section 405 when its contents is indicative of, for example, speech information transmitted on uplink user channel 206, while being output to wireless channel control section 406 when its contents is indicative of various control signals transmitted on access channel 201 and uplink control channel 202 described previously.

IF section 405 transmits the information such as speech output from TDMA section 404 to PSTN (Public Switched Telephone Network) and ISDN (Integrated Services Digital Network).

Wireless channel control section 406 performs an operation corresponding to the contents of the control information output from TDMA section 404. In addition, the operation is described later.

Meanwhile, at the time of reception, signals transmitted from PSTN and ISDN are output to TDMA section 404 through IF section 405. Further, various control signals output from wireless channel control section 406 are provided to TDMA section 404 according to the frame format described previously.

TDMA section 404 performs general TDMA processing on the signal output from IF section 405 or wireless channel control section 406 according to the frame contents described previously. In other words, the section 404 adds a control signal such as a unique word to various control signals output from IF section 405 or the signal such as a speech signal output from wireless channel control section 406 according to the frame contents described previously to generate data corresponding to a time slot, and then inserts the data into a predetermined slot to output to modulation/demodulation section 403.

Modulation/demodulation section 403 performs modulation such as π /4QPSK scheme on the signal output from TDMA section 404 to output to RF section 402. RF section 402 performs frequency conversion on the signal modulated in modulation/demodulation section 403, and the resultant signal is transmitted to each mobile station 102 through antenna section 401.

Further, the operation in wireless channel control section 406 is explained according to the frame contents illustrated in FIG.3.

The operation on access channel 201 is first explained.

Using uplink time slot (A_{U}), each mobile station 102 transmits a control signal to acquire a control channel to access channel managing section 504. Receiving the signal, access channel managing section 504 outputs a signal for requesting to allocate a control channel to each mobile station 102 to control channel managing section 505. Control channel managing section 505 allocates a control channel to each mobile station 102, and outputs the allocation result to access channel managing section 504.

Using downlink time slot (A_{D}), access channel managing section 504 transmits to each mobile station 102 the allocation result (in a previous frame) for each mobile station 102 and various control information.

The operations on uplink control channel 202 and downlink control channel 203 are next explained.

Using uplink control channel 202, each mobile station 102 transmits a reporting signal for reporting the contents of a transmission buffer to control channel managing section 505. Receiving the signal, control channel managing section 505 outputs to user channel managing section 506 a signal for requesting to allocate a time slot on each user channel along with the reporting signal.

Specifically, the reporting signal, that is, the uplink transmission situation and QoS requirement situation of the mobile station are stored in uplink transmission situation buffer 603 illustrated in FIG.7. Further, the signal for requesting to allocate a time slot is output to channel allocating section 602 illustrated in FIG.7. At the same time, the downlink transmission situation and QoS requirement situation of the base station are stored in downlink transmission situation buffer 601.

Based on the uplink transmission situation, QoS requirement situation of the mobile station, downlink transmission situation and QoS requirement situation of the base station, channel allocating section 602 allocates time slots for use by the mobile station on uplink user channel 206 and downlink user channel 204. The specific allocation method is as described previously.

When the channel allocation is finished, channel allocating section 602 outputs the allocation result to control channel managing section 505.

Using downlink control channel 203, control channel managing section 505, i.e., channel allocating section 602 transmits the channel allocation result on each user channel to each mobile station 102.

The operations on downlink user channel 204 and uplink user channel 206 are finally explained.

Using downlink user channel 204, based on the frame contents, i.e., the allocation result described above, information such as speech output from IF section 405 is transmitted to each mobile station 102.

Using uplink user channel 206, based on the allocation result on each user channel notified using downlink control channel 203, each mobile station 102 transmits information such as speech to base station 101.

The foregoing is the operations of the base station provided with the wireless communication apparatus according to this embodiment.

Thus, according to this embodiment, the number of uplink time slots and the number of downlink time slots on a user channel are determined based on the number of transmission queuing cells (uplink traffic amount) that each mobile station has, the number of transmission queuing cells (downlink traffic amount) that the base station has and QoS that each mobile station and the base station have, and therefore the channel allocation is performed that faithfully and fast responds to uplink and downlink traffic amounts. Accordingly, it is possible to achieve a communication that responds to an asymmetric traffic and QoS of a user without affecting the frame utilization rate and system capacity.

### (Second embodiment)

Second embodiment is modified from the first embodiment to assure the QoS of a user to its maximum.

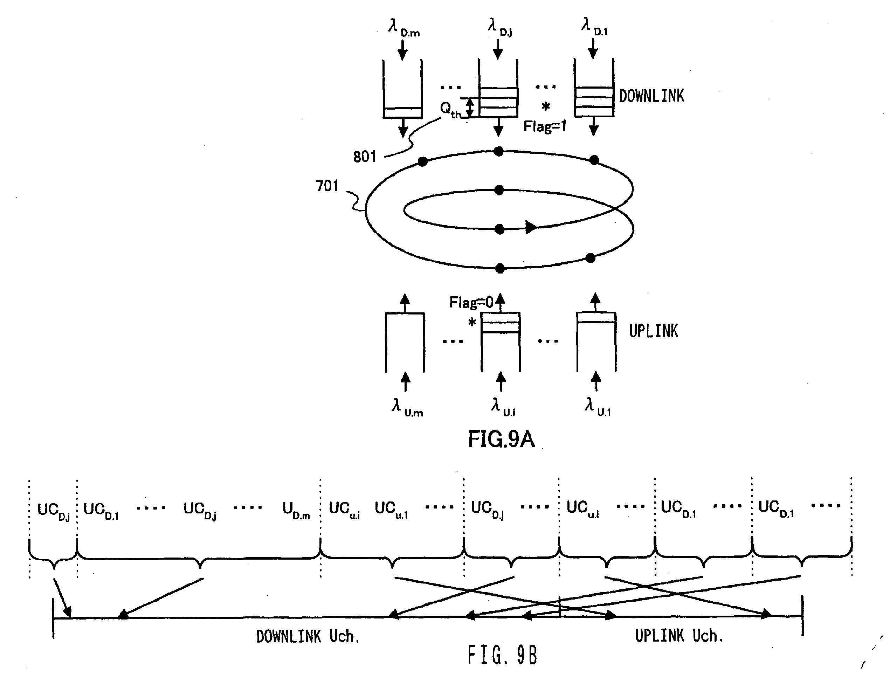

A wireless communication apparatus according to the second embodiment has the same configuration as that in the first embodiment except a channel allocating section, and detailed explanations are omitted. The channel allocating section in the wireless communication apparatus according to this embodiment is explained below in points different from the channel allocating section in the first embodiment using FIG.9A. In addition, the same sections as those in the first embodiment are not explained.

FIG.9A is a schematic diagram illustrating a channel allocation method for use by the channel allocating section in a base station provided with the wireless communication apparatus according to the second embodiment of the present invention.

First with respect to each of particular users, the channel allocating section sets a threshold Qₜₕ 801 for the number of transmission queuing cells, and further sets a flag indicative of a compared result between the number of transmission queuing cells and the threshold Qₜₕ 801. Specifically, the channel allocating section sets a flag of "1" for a particular user that has transmission queuing cells of which the number is more than the threshold Qₜₕ 801, and a flag of "0" for a particular user that has transmission queuing cells of which the number is less than the threshold Qₜₕ 801, among the particular users.

Further when the particular user is present of which the flag indicates "1", the channel allocating section performs the loop check along the high-rate ring described previously until flag values of the particular users become all "0". The loop check when the flag values of the particular users have become all "0" is the same as that in the first embodiment.

A specific example of the allocation method for use by the above-mentioned allocating section is next explained further using FIG.9B. FIG.9B is a schematic diagram illustrating a channel allocation result by the channel allocating section in a base station provided with the wireless communication apparatus according to this embodiment.

It is herein assumed as in the first embodiment that an iₜₕ user on uplink and jₜₕ user on downlink are particular users. Further assume that the threshold Qₜₕ 801 is "2". In addition, a value of the threshold Qₜₕ may be changed as appropriate corresponding to, for example, a communication condition and usage.

First, the channel allocating section examines the numbers of transmission queuing cells of particular users, and sets a flag of the iₜₕ user on uplink to "0" and a flag of the jₜₕ user on downlink to "1". At this point, since the user is present of which the flag indicates "1", the channel allocating section performs the loop check along the high-rate ring.

That is, the channel allocating section allocates a sub-slot (UC_{D,J}) to the jₜₕ user on downlink, while decreasing the number of transmission queuing cells in the buffer for this user by 1. The number of transmission queuing cells of the jₜₕ user on downlink becomes thereby less than the threshold Qₜₕ 801, and the channel allocating section sets the flag of the user to "0".

Flag values of the particular users thus become all "0", and therefore the channel allocating section finishes the preferential allocation to the particular users described above. Thereafter, the channel allocating section performs the general allocation in the same way as in the first embodiment.

As a result, in the order illustrated in FIG.9B, each user is allocated sub-slots. As illustrated in FIG.9B, it is obvious that sub-slots are preferentially allocated to the jₜₕ (particular) user on downlink who has transmission queuing cells of which the number is more than the threshold Qₜₕ 801.

Thus according to this embodiment, the channel is preferentially allocated to a particular user by considering the number of transmission queuing cells that the user has, and therefore it is possible to assure a reliable communication to the particular user that needs to perform a real-time and fast communication such as an image. At the same time, it is possible to achieve a communication that responds to an asymmetric traffic and QoS of the user without affecting the frame utilization rate and system capacity.

### (Third embodiment)

The third embodiment is to assure the QoS of a user to its maximum as the second embodiment.

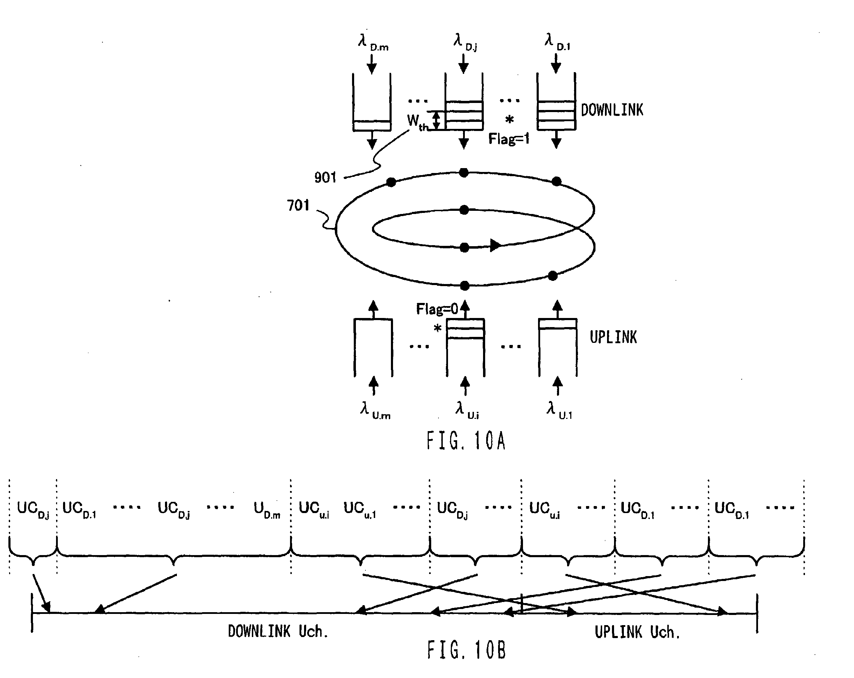

A wireless communication apparatus according to the third embodiment has the same configuration as that in the second embodiment except a channel allocating section, and detailed explanations are omitted. The channel allocating section in the wireless communication apparatus according to this embodiment is explained below in points different from the channel allocating section in the second embodiment using FIG.10A. In addition, the same sections as those in the second embodiment are not explained.

With respect to each of particular users, the channel allocating section sets a threshold Wₜₕ 901 for a transmission queuing time of transmission queuing cell and further sets a flag indicative of a compared result between the transmission queuing time of transmission queuing cell and the threshold Wₜₕ 901. Specifically, the channel allocating section sets a flag of "1" for a particular user that has a transmission queuing time of transmission queuing cell that is longer than the threshold Wₜₕ 901, and a flag of "0" for a particular user that has a transmission queuing time of transmission queuing cell that is shorter than the threshold Wₜₕ 901, among the particular users.

In addition, the transmission queuing time of transmission queuing cell corresponds to a summation, with respect to all transmission queuing cells, of a time from the time information on a transmission queuing cell that a particular user has is stored in uplink transmission situation buffer 603 or downlink transmission situation buffer 601 illustrated in FIG.7 at the time the channel allocation is initiated to the time the channel allocating section starts the channel allocation. In order to obtain the transmission queuing time of transmission queuing cell described above, the channel allocating section stores transmission queuing times with respect to all transmission queuing cells that a particular user(s) has.

In addition, while this embodiment explains the case that the transmission queuing time of transmission queuing cell is set as described above, the present invention is not limited to the case, and is capable of being carried out in any case modified as appropriate such as a case that the transmission queuing time of transmission queuing cell is a time from the time a particular user transmits information on a transmission queuing cell to the time a base station receives the information.

The foregoing is a different point of the channel allocating section in this embodiment from the channel allocating section in the second embodiment.

A specific allocation method by the above-mentioned channel allocating section is next explained further using FIG.10B. FIG.10B is a schematic diagram illustrating a channel allocation result by the channel allocating section in a base station provided with the wireless communication apparatus according to this embodiment. In addition, to simplify the explanation, assume that a transmission queuing time corresponding to a transmission queuing cell that each user has is all the same.

It is herein assumed as in the second embodiment that an iₜₕ user on uplink and jₜₕ user on downlink are particular users. Further assume that the threshold Wₜₕ 901 is a transmission queuing time corresponding to two transmission queuing cells.

First, the channel allocating section examines the transmission queuing times of transmission queuing cell of particular users, and sets a flag of the ith user on uplink to "0" and a flag of the jₜₕ user on downlink to "1". At this point, since the user is present of which the flag indicates "1", the channel allocating section performs the loop check along the high-rate ring.

In other words, the channel allocating section allocates a sub-slot (UC_{D,J}) to the jₜₕ user on downlink, while decreasing the number of transmission queuing cells in the buffer for this user by 1. The transmission queuing time of transmission queuing cell of the jₜₕ user on downlink becomes thereby less than the threshold Wₜₕ 901, and the channel allocating section sets the flag of the user to "0" . The operation performed thereafter is the same as in the second embodiment and the explanation thereof is omitted.

As a result, in the order illustrated in FIG.10B, each user is allocated sub-slots. As illustrated in FIG.10B, it is obvious that sub-slots are preferentially allocated to the jₜₕ (particular) user on downlink who has the transmission queuing time of transmission queuing cell that is longer than the threshold Wₜₕ 901.

Thus according to this embodiment, the channel is preferentially allocated to a particular user by considering the transmission queuing time of transmission queuing cell that the user has, and therefore it is possible to assure a reliable communication to the particular user that needs to perform a real-time and fast communication such as an image. At the same time it is possible to achieve a communication that responds to an asymmetric traffic and QoS of the user without affecting the frame utilization rate and system capacity.

### (Fourth embodiment)

This embodiment allocates, using a CDMA technique, a temporary dedicated access channel to a transmission reporting signal that reflects a transmission queuing situation of a transmission buffer of each wireless terminal for each frame.

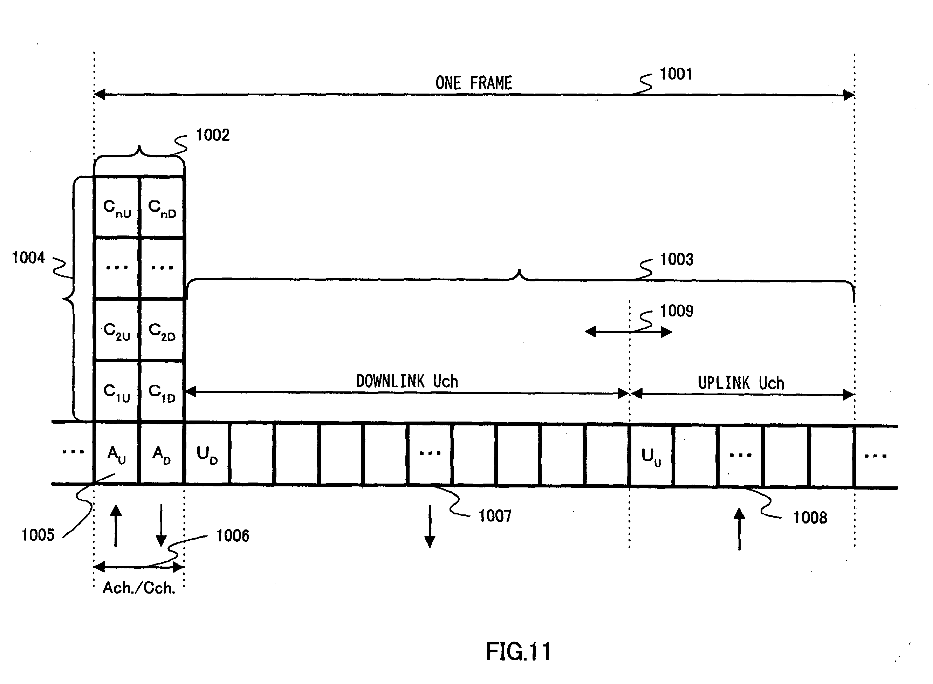

An example of a frame structure of this embodiment is explained using FIG.11. In FIG.11, "1001" denotes a frame, "1002" denotes a multi control channel using the CDMA technique, "1003" denotes a user and user allocation channel using a technique such as TDMA, CDMA or OFDM, "1004" denotes an uplink/downlink dedicated control channel, "1005" denotes an uplink/downlink random access channel (only the time a mobile station is turned on), "1006" denotes an uplink/downlink access and control channel, "1007" denotes a downlink user channel, "1008" denotes an uplink user channel, and "1009" denotes a variable uplink/downlink user channel boundary.

The frame structure of this embodiment contains, as in the conventional TDD system, access channel (Ach) 1005, control channel (Cch) 1004, and user channels 1007 and 1008. Ach and Cch are used to transmit and receive signals using the CDMA system. This embodiment thereby aims to efficiently use channels.

A frame is divided into two parts, i.e., terminal transmission queuing situation reporting signal part 1002 and user information part 1003. The former part is for a transmission queuing situation reporting signal indicative of a transmission queuing situation of a transmission buffer of each wireless terminal, and the reporting signal is allocated a temporary dedicated multi control channel using a CDMA system to report the transmission queuing situation to a base station without a collision.

The dedicated control channel does not provide interference with other channels when no signal is thereon due to a characteristic of the CDMA with a software-like system capacity. It is thereby possible to use channels effectively.

The allocation of multi control channel 1004 is performed as described next. In the case of a mobile communication, a base station provides a power-on access channel and channel code broadcast channel 1005, and acquires an access channel code of each mobile station in calling, answering and handover.

The base station is provided with a relation table with addresses (or user IDs) of respective mobile stations and multi control channel codes as shown in the following Table 1, and manages the allocation, search and usage situation of the multi control channel. The mobile station uses power-on access channel 1005 only at the time the mobile station is turned on in calling, and transmits a user address or channel ID to the base station using a random access protocol, and the base station obtains a dedicated multi control channel code. In addition, in Table 1, "A" denotes an identification address of a terminal accessing, "x" denotes non-access, "C" denotes a multi control channel code being used and "Cx" denotes an unused channel code.

**[Table 1]**

| Wireless Terminal Identification Address | Multi Control Channel Code | Usage Situation |
|---|---|---|
| A1 | C1 | 1 |
| A2 | C2 | 1 |
| A3 | C3 | 1 |
| . . . | . . . | 1 |
| X | Cx1 | 0 |
| X | Cx2 | 0 |
| X | Cx3 | 0 |
| . . . | . . . | 0 |

That is, the above table is provided in order for a base station to manage the allocation, usage situation and the like of the control channel. Before performing a communication, each wireless terminal applies a control channel number and acquires a control channel for the terminal, and the base station notifies the terminal of the control channel code being not used currently (usage situation is 0) with the identification address of the terminal. Further, the base station releases the corresponding control channel code when the calling is finished.

The base station notifies the terminal of a code of a vacant channel using the channel code broadcast channel. In answering, the base station notifies the mobile station of a code of a vacant multi control channel directly using channel code broadcast channel 1002. In a handover, a handover-destination base station searches for a vacant multi control channel, and transmits a code of an allocated multi control channel to the base station currently communicating with the mobile station, and the base station notifies the mobile station of the code using the channel code broadcast channel.

Thus according to this embodiment, a wireless terminal transmits a transmission queuing reporting signal to a base station without a collision by using a temporary dedicated control channel, and the base station is thereby capable of instantaneously recognizing a transmission queuing situation of the wireless terminal, and of allocating a user channel corresponding to a transmission/reception amount on each channel and QoS by comprehensively considering a downlink channel reception situation of each user and an uplink transmission queuing situation of each uplink channel. It is thereby possible to eliminate useless channel occupations and collision of a transmission packet and transmission queuing situation reporting signal of the terminal and to perform wireless communications with high efficiency.

### (Fifth embodiment)

This embodiment modified from the fourth embodiment is to provide efficient utilization of a control channel by dividing the control channel into a dedicated control channel and a common control channel.

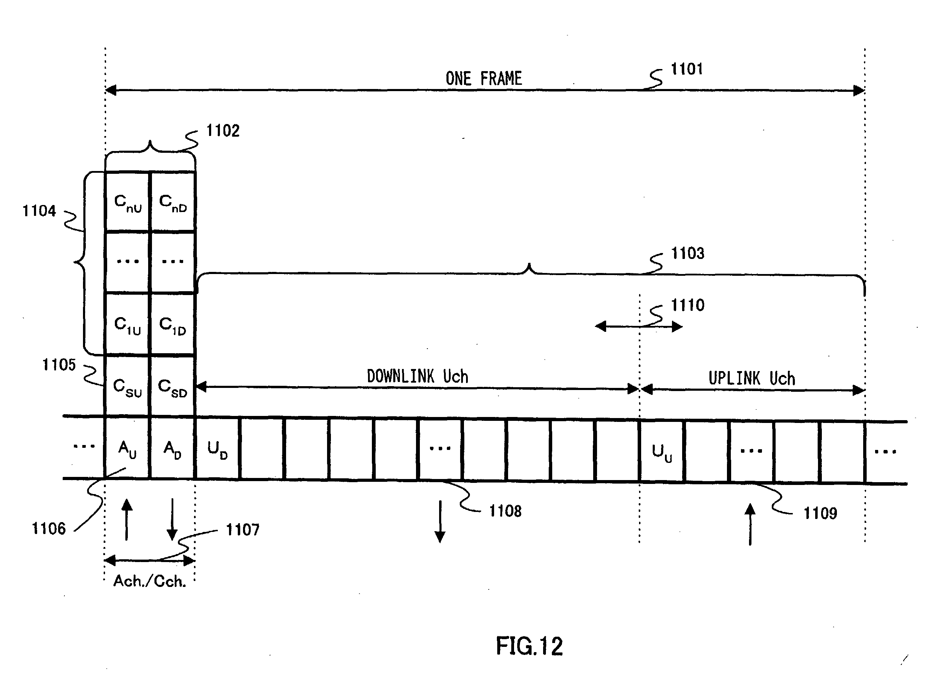

An example of a frame structure according to this embodiment is explained using FIG.12. In FIG. 12, "1101" denotes a frame, "1102" denotes a multi control channel using a CDMA technique, "1103" denotes a user and user allocation channel using a technique such as TDMA, CDMA or OFDM, "1104" denotes an uplink/downlink particular user dedicated control channel, "1105" denotes an uplink/downlink normal user control channel (random access common channel for data and so on), "1106" denotes an uplink/downlink random access channel, "1107" denotes an uplink/downlink access and control channel, "1108" denotes a downlink user channel, "1109" denotes an uplink user channel, and "1110" denotes a variable uplink/downlink user channel boundary.

The frame according to this embodiment is provided with Ach, Cch and Uch. Cch according to this embodiment is divided into moving-picture dedicated control channel (C_{nD}) 1104 and data common control channel (C_{SD}) 1105.

Dedicated control channel 1104 is used in the same way as the control channel described in the embodiment described previously. Common control channel 1105 is used to transmit an uplink control signal using a random access protocol to a user having data or the like that does not require a severe delay characteristic.

Thus according to this embodiment, two kinds of control channels are provided corresponding to a delay characteristic requirement, and therefore it is possible to assure a quality requirement of a user and to provide an efficient utilization of the control channel.

In addition, in the above-mentioned fourth and fifth embodiments, in the case of a mobile communication, the multi control channel is provided with the power-on access channel and channel code broadcast channel, and it is possible to acquire an access channel code of each mobile station in calling, answering and handover. Further, in other cases such as a wireless LAN, the multi control channel is not provided with the power-on access channel and channel code broadcast channel, and a control channel code of each wireless terminal is predetermined. At the time of transmission, the terminal is capable of notifying a base station of a transmission queuing situation of the terminal using a corresponding multi control channel.

Further in the case of a mobile communication, in calling, a mobile station uses the power-on access channel only at the time the mobile station is turned on, transmits a user address or channel ID to a base station using a random access protocol, and thereby is capable of obtaining a dedicated multi control channel code. Meanwhile in answering, the base station is capable of notifying the mobile station of a code of a vacant multi control channel directly using the channel code broadcast channel. In a handover, a handover-destination base station searches for a vacant multi control channel, and transmits a code of an allocated multi control channel to a base station currently communicating with the mobile station, and the base station is capable of notifying the mobile station of the code using the channel code broadcast channel.

Further in the above-mentioned fourth and fifth embodiments, it may be possible to adopt communication systems other than the CDMA system if a control channel could be allocated to each terminal, however, it is preferable to adopt the CDMA system in light of efficient channel utilization.

As described above, according to the present invention, it is possible to provide a wireless communication apparatus which faithfully responds to an asymmetric traffic and QoS of a user and which is capable of improving the frame utilization rate and system capacity.

Further, by taking advantage of the CDMA having the improved system capacity, each wireless terminal transmits to a base station a queuing reporting signal indicative of a transmission queuing situation of an uplink transmission buffer of the terminal for each frame without a collision by using a temporary dedicated control channel, and the base station is thereby capable of instantaneously recognizing the transmission queuing situation of the wireless terminal. Further, the base station allocates a user channel corresponding to a transmission/reception amount on each channel and QoS without distinguishing between the uplink and downlink by comprehensively considering a downlink channel reception situation of each user and an uplink transmission queuing situation of each uplink channel. Accordingly it is possible to prevent the utilization of a useless channel and the occurrence of a collision of a transmission packet and another signal such as transmission request signal of the terminal and to provide a wireless communication apparatus with high efficiency.

This application is based on the Japanese Patent Applications No.HEI11-178737 filed on June 24, 1999 and No.HEI10-356409 filed on December 15, 1998, entire contents of which are expressly incorporated by reference herein.

### Industrial Applicability

The present invention is preferable to be used in a field of wireless communication using ATM.

## Claims

1. A wireless communication apparatus comprising:
monitoring means for monitoring for each unit frame a situation of transmission queuing cell in each of uplink storing means and downlink storing means for each of a plurality of communication users; and
allocating means for allocating a unit sub-slot to each transmission queuing cell for each unit frame based on an entire situation of the storing means.

2. The wireless communication apparatus according to claim 1, wherein the allocating means allocates unit sub-slots of which the number is in a range that the unit frame is capable of storing, according to a constant regulation.

3. The wireless communication apparatus according to claim 2, wherein the constant regulation includes a regulation such that the unit sub-slot is fairly allocated to each transmission queuing cell stored in each storing means and the transmission queuing cell allocated the unit sub-slot is deleted from the storing means.

4. The wireless communication apparatus according to claim 3, wherein the constant regulation includes a regulation such that a first circulation is repeated such that at an allocation occasion for each of the uplink storing means and the downlink storing means for each communication user, the unit sub-slot is allocated to a transmission queuing cell with a longest transmission queuing time stored in each storing means.

5. The wireless communication apparatus according to claim 4, wherein the constant regulation includes a regulation such that the unit sub-slot is preferentially allocated to a particular transmission queuing cell stored in each storing means.

6. The wireless communication apparatus according to claim 5, wherein the constant regulation includes a regulation that provides between each first circulation a second circulation such that at an allocation occasion for each of the uplink storing means and the downlink storing means of each communication user, the unit sub-slot is allocated only to the particular transmission queuing cell that has the longest transmission queuing time stored in each storing means.

7. The wireless communication apparatus according to claim 6, further comprising:
arranging means for dividing all unit sub-slots allocated to transmission queuing cells for uplink and downlink respectively into an uplink sub-slot group and a downlink sub-slot group, gathering unit sub-slots allocated to each communication user at each of the uplink sub-slot group and the downlink sub-slot group into a channel, and arranging the channel on each of an uplink user channel and a downlink user channel in the unit frame.

8. The wireless communication apparatus according to claim 7, wherein the allocating means comprises comparing means for performing a comparison between the total number of stored particular transmission queuing cells and a threshold for each storing means, and performs an allocation corresponding to a result of the comparison.

9. The wireless communication apparatus according to claim 7, wherein the allocating means comprises comparing means for performing a comparison between a transmission queuing time of a stored particular transmission queuing cell and a threshold for each storing means, and performs an allocation corresponding to a result of the comparison.

10. The wireless communication apparatus according to claim 8, wherein the comparing means performs the comparison only to storing means for storing a particular transmission queuing cell.

11. The wireless communication apparatus according to claim 9, wherein the comparing means performs the comparison only to storing means for storing a particular transmission queuing cell.

12. The wireless communication apparatus according to claim 10, wherein the comparing means sets the threshold corresponding to a quality requirement of the particular transmission queuing cell.

13. The wireless communication apparatus according to claim 11, wherein the comparing means sets the threshold corresponding to a quality requirement of the particular transmission queuing cell.

14. The wireless communication apparatus according to claim 1, wherein the frame is divided into a terminal transmission queuing situation reporting signal part and a user information part, and a dedicated control channel is allocated to a transmission queuing situation reporting signal of each wireless terminal.

15. The wireless communication apparatus according to claim 14, wherein a second control channel is provided besides the dedicated control channel, and both control channels are used corresponding to a delay characteristic requirement of each wireless terminal.

16. A base station provided with a wireless communication apparatus, said wireless communication apparatus comprising:
monitoring means for monitoring for each unit frame a situation of transmission queuing cell in each of uplink storing means and downlink storing means for each of a plurality of communication users; and
allocating means for allocating a unit sub-slot to each transmission queuing cell for each unit frame based on an entire situation of the storing means.

17. A communication terminal apparatus performing wireless communications with a base station apparatus provided with a wireless communication apparatus, said wireless communication apparatus comprising:
monitoring means for monitoring for each unit frame a situation of transmission queuing cell in each of uplink storing means and downlink storing means for each of a plurality of communication users; and
allocating means for allocating a unit sub-slot to each transmission queuing cell for each unit frame based on an entire situation of the storing means.

18. The communication terminal apparatus according to claim 17, wherein the communication terminal apparatus reports a situation of transmission queuing cell to the base station.

19. A wireless communication method, comprising:
monitoring for each unit frame a situation of transmission queuing cell in each of uplink storing means and downlink storing means for each of a plurality of communication users reported from respective one of the plurality of communication users; and
allocating a unit sub-slot to each transmission queuing cell for each unit frame based on an entire situation of the storing means.

20. The wireless communication method according to claim 19, further comprising:
performing a comparison between the total number of stored particular transmission queuing cells and a threshold for each storing means; and
performing an allocation corresponding to a result of the comparison.

21. The wireless communication apparatus according to claim 19, further comprising:
performing a comparison between a transmission queuing time of a stored particular transmission queuing cell and a threshold for each storing means; and
performing an allocation corresponding to a result of the comparison.

22. The wireless communication method according to claim 20, further comprising:
dividing all unit sub-slots allocated to transmission queuing cells for uplink and downlink respectively into an uplink sub-slot group and a downlink sub-slot group;
gathering unit sub-slots allocated to each communication user at each of the uplink sub-slot group and the downlink sub-slot group to construct a channel;
arranging the channel on each of an uplink user channel and a downlink user channel in the unit frame; and
notifying said each communication user of a result of arrangement.

23. The wireless communication method according to claim 21, further comprising:
dividing all unit sub-slots allocated to transmission queuing cells for uplink and downlink respectively into an uplink sub-slot group and a downlink sub-slot group;
gathering unit sub-slots allocated to each communication user at each of the uplink sub-slot group and the downlink sub-slot group to construct a channel;
arranging the channel on each of an uplink user channel and a downlink user channel in the unit frame; and
notifying said each communication user of a result of arrangement.
